# EUROPEAN PATENT APPLICATION

(11) **EP 0 571 953 A1**
(43) Date of publication of application: **01.12.1993**
(21) Application number: 93108439.6
(22) Date of filing: 25.05.1993
(51) Int. Cl.: D04H 1/42, D06M 10/00

(54) **Hydrophilic fiber sheet and process for producing the same**

(30) Priority: 26.05.1992 JP 133209/92; 27.10.1992 JP 288739/92
(71) Applicant: NITTO DENKO CORPORATION, Osaka (JP); Hitachi Maxell Ltd., Osaka-fu (JP)
(72) Inventor: Tachibana, Toshimitsu, c/o NITTO DENKO CORPORATION, Ibaraki-shi, Osaka (JP); Urairi, Masakatsu, c/o NITTO DENKO CORPORATION, Ibaraki-shi, Osaka (JP); Matsumoto, Kenji, c/o NITTO DENKO CORPORATION, Ibaraki-shi, Osaka (JP); Yano, Shuji, c/o NITTO DENKO CORPORATION, Ibaraki-shi, Osaka (JP); Shinomura, Toshihiko, c/o NITTO DENKO CORPORATION, Ibaraki-shi, Osaka (JP)
(74) Representative: Grünecker, Kinkeldey, Stockmair & Schwanhäusser Anwaltssozietät

(57) **Abstract**

A hydrophilic fiber sheet and a process for producing the same as disclosed. The hydrophilic sheet comprising a hydrophilic fiber sheet comprising an air permeable sheet comprising synthetic fibers, wherein the absorption rate thereof for pure water when an end of the sheet is immersed in pure water under an atmosphere of 25°C and 60% in humidity is at least 10 mm/2 minutes.

## Description

### FIELD OF THE INVENTION

The present invention relates to a fiber sheet prepared by rendering a nonwoven fabric, etc., using hydrophobic fibers hydrophilic and to a process for producing the hydrophilic fiber sheet. More particularly, the invention relates to a hydrophilic fiber sheet, even the inside of which is rendered hydrophilic, useful as, for example, a prefilter for a liquid filtering apparatus, a membrane support, a separator for a battery, and a liquid-holding material of a separator for a battery.

### BACKGROUND OF THE INVENTION

Hitherto, nonwoven fabrics of polypropylene or polyethylene, nonwoven fabrics of a composite material of polyethylene and polypropylene, and nonwoven fabrics of polyester are used as prefilters for a liquid filtering apparatus or a mambrane support. Now, the nonwoven fabric of the composite material of polyethylene and polypropylene described above is a blend-stretched type nonwoven fabric prepared by blending the above-described two kinds of materials and then melt-spinning and stretching the blend or a core-sheath structure type nonwoven fabric prepared by heat-welding composite fabrics (conjugate type fibers) formed by coating each core composed of one of the above-described two kinds of the materials with the other material. Those nonwoven fabrics utilize matrix strength of the polypropylene and thermochemical characteristics of the polyethylene. For example, a heat-welded type nonwoven fabric using high-melting polypropylene as a core component and low-melting polyethylene as a sheath component is known.

However, since those nonwoven fabrics are hydrophobic, there is a problem that in the case of using them as the prefilter for the liquid filtering apparatus or the membrane support described above, they have poor water permeability due to a large permeability resistance. Thus, as a means for rendering the nonwoven fabrics hydrophilic, in the case of, for example, a filter having controlled pore sizes, surface treatment by plasma or sputtering, irradiation with radiations, and the like are disclosed in JP-A-61-133102, JP-A-53-9277, JP-A-59-18664, JP-A-1-98640, etc. (The term "JP-A" as used herein means an "unexamined published Japanese patent application".). Also, in the case of the separator for a battery, the methods of imparting a hydrophilic property to the nonwoven fabric are disclosed in JP-A-64-86445, JP-A-58-166631, JP-A-4-167355, etc.

However, in those conventional methods, the nonwoven fabric thus treated absorbs water in the thickness direction of the fabric, but when the nonwoven fabric is immersed in water in the perpendicular direction to the surface of water, the force of absorbing up water is weak due to insufficient hydrophilic property thus imparted and hence its water-holding force is also weak.

Further, the hydrophilic property imparted to other porous fiber sheets such as woven or knitted goods is insufficient and for sufficiently imparting a hydrophilic property to those materials, there are problems that the strength of the porous fiber sheet itself is decreased and the sheet causes a heat shrinkage.

### SUMMARY OF THE INVENTION

Extensive investigations have been made to overcome the the above-described problems involved in the conventional techniques.

Accordingly, one object of the present invention is to provide a synthetic fiber sheet rendered hydrophilic without lowering the characteristics thereof, such as strength of the fibers, or the like.

Another object of the present invention is to provide a process for producing the hydrophilic fiber sheet.

That is, according to one embodiment of the present invention, there is provided a hydrophilic fiber sheet comprising an air permeable sheet comprising synthetic fibers, wherein when one end of the sheet is immersed in pure water under an atmosphere of 25°C and 60% in humidity, an absorption rate for pure water is at least 10 mm/2 minutes.

In the hydrophilic fiber sheet of the present invention described above, it is preferred that the air permeable sheet is a nonwoven fabric comprising polyester fibers.

Also, in the hydrophilic fiber sheet of the present invention described above, it is preferred that the air permeable sheet is a nonwoven fabric comprising polyolefin fibers.

Furthermore, in the hydrophilic fiber sheet of the present invention described above, the air permeable sheed is a nonwoven fabric comprising composite fibers in which the surfaces of polypropylene fibers are sheathed with polyethylene, or a nonwoven fabric containing the composite fibers and polypropylene fibers, wherein the ratio of O/C on the surface thereof by an electron spectroscopy for chemical analysis (ESCA) is preferably in the range of from 0.05 to 0.7 and more preferably in the range of from 0.10 to 0.35.

According to the another embodiment of the present invention, there is provided a process of producing a hydrophilic fiber sheet comprising an air permeable sheet comprising synthetic fibers, which comprises subjecting at least a part of the synthetic fibers constituting the sheet to a low-temperature plasma treatment under conditions that the product of an output density of a high-frequency output of from 5 to 15 MHz and a treatment time is from 0.1 to 50 W·sec./cm² and a total gas pressure is from 0.01 to 10 Torr to render the part of the synthetic fibers hydrophilic.

### DETAILED DESCRIPTION OF THE INVENTION

The present invention is described in detail below.

The air permeability of the fiber sheet in the present invention measured by the air permeability measurement method (or Garley method) defined by JIS P-8117 is preferably 100 sec./100 ml or less, and more preferably 20 sec./100 ml or less, and the lower limit of the air permeability is preferably 0.1 sec./100 ml.

Also, the water absorption rate of the fiber sheet in the present invention is more preferably 30 mm/2 min or more.

According to the construction of the present invention, since even in a hydrophobic fiber sheet comprising synthetic fibers, the absorption rate of pure water when a part of the sheet is immersed in pure water under the atmosphere of 25°C and 60% in humidity is at least 10 mm/2 minutes, the hydrophobic fiber sheet becomes a fiber sheet having a sufficient hydrophilic property.

Also, according to the preferred construction of the present invention wherein the fiber sheet is a nonwoven fabric comprising polyester fibers, the fiber sheet is essentially hydrophobic fibers but a porous fiber sheet wherein the surface of the fibers shows a preferred hydrophilic propery and having excellent physical properties such as a dimensional stability, a durability, etc., can be obtained.

Furthermore, according to the preferred constuction of the present invention wherein the fiber sheet is a nonwoven fabric comprising polyolefin fibers, a porous fiber sheet having similarly excellent physical characteristics such as a dimensional stability, a durability, etc., can be obtained.

Also, according to other preferred construction of the present invention wherein the hydrophilic fiber sheet is the nonwoven fabric comprising composite fibers of polypropylene fibers the surfaces of which are sheathed with polyethylene, or the nonwoven fabric containing the composite fibers and polypropylene fibers, the porous fiber sheet having similarly excellent physical characteristics such as a dimensional stability, a durability, etc., can be obtained. That is, in the case of a nonwoven fabric comprising polypropylene fibers alone, the water-absorbing property of modified fibers obtained by the hydrophilic treatment by a plasma treatment changes with the passage of time, but in the case of the core-sheath composite fibers wherein the surfaces of polypropylene fibers are sheathed with polyethylene, the decrease of the water-absorbing property is greatly reduced and the excellent hydrophilic property can be maintained. Also, in the case of the nonwoven fabric prepared by mixing from 1 to 50% by weight of polypropylene fibers to maintain the strength, the decrease of the water-absorbing property with the passage of time is small due to the hydrophilic property-maintaining effect of the polyethylene surface.

According to the production process of the present invention, by applying a low-temperature plasma treatment under the specific condition, a porous fiber sheet imparted with a hydrophilic property that the absorption rate of pure water is at least 10 mm/2 minutes is obtained without changing the structure and the characteristics such as strength that the porous fiber sheet inherently possesses.

The present invention is described in more detail.

According to the present invention, a porous fiber sheet which is pure and has high durability, acid resistance and alkali resistance since hydrophilic monomers are not used and which can be suitably used as a prefilter for a liquid filtering apparatus, a support for membrane, a liquid-holding material of a separator for a battery, etc., can be obtained.

Furthermore, in the process of the present invention, the surface of fibers constituting a porous fiber sheet is rendered hydrophilic by subjecting to a low-temperature plasma treatment under the condition that the product of the output density of a high-frequency output of from 5 to 15 MHz and the treatment time is from 0.5 to 50 W·sec./cm² and a total gas pressure is from 0.01 to 10 Torr. The treatment temperature (ambient temperature) is preferably 100°C or less, and more preferably about normal temperature (room temperature).

The porous fiber sheet having nominal pore sizes of from 1 µm to 200 µm, a porosity of from 30% to 80%, a thickness of from 20 µm to 500 µm, fibril diameters of from 1 µm to 100 µm, and a basis weight of from 5 to 100 g/m² can be suitably used in the present invention.

Examples of the material for the porous fiber sheet used in the present invention preferably are polyolefins such as polypropylene or polyethylene; polyesters such as polyethylene terephthalate; polyamides; polyphenylene sulfide; and the like. In particular, when the polyolefins are used, polypropylene, polyethylene, etc., may be used alone or a composite fiber of them such as a blend of polypropylene and polyethylene, alloyed polymer mixture of them, conjugated fibers such as a core-sheath structure or other type of them may be used. In the case of the porous fiber sheet comprising the nonwoven fabric comprising the composite fibers wherein the surfaces of polypropylene fibers are sheathed with polyethylene or comprising the nonwoven fabric containing the composite fibers and polypropylene fibers, it is preferred that the ratio of O/C of the surface of the porous fiber sheet by an ESCA analysis is controlled from 0.05 to 0.7 by the hydrophilic treatment. When the ratio of O/C of the porous fiber sheet by the ESCA analysis is less than 0.05, the sheet is not sufficiently rendered hydrophilic and as the case may be, it is reluctant to obtain the water absorption rate for pure water of 10 mm/2 minutes. On the other hand, if the ratio of O/C is over 0.7, the breaking strength and the breaking elongation of the porous fiber sheet are decreased, whereby the mechanical strength of the porous fiber sheet tends to deteriorate.

In the present invention, the porous fiber sheet is obtained by rendering the surfaces of the fibers constituting the porous fiber sheet hydrophilic by subjecting the porous fiber sheet to, for example, a low-temperature plasma treatment under the specific condition. Such a plasma treatment is conducted by introducing a gas species (such as O₂, H₂, N₂, H₂O, CO₂, He, Ar, NO, etc.) under a reduced pressure condition to adjust the total gas pressure to generally from 0.01 to 10 Torr, and preferably from 0.01 to 1.0 Torr and then conducted under the condition that the product of the high-frequency with output density of a radio frequency output (5 to 15 MHz) and the treatment time becomes from 0.1 to 50 W·sec./cm², and preferably from 0.1 to 10 W·sec./cm².

If the product of the high-frequency output density and the treatment time is less than the above-described range, the hydrophilic property imparted becomes insufficient, and on the other hand, if the product is larger than the above-described range, the problems occur that the fibrils of the porous fiber sheet are cut and also the porous fiber sheet is shrinked, deformed, and yellowed by heat.

If the total gas pressure is lower than 0.01 Torr, the improvement of quality of the sheet is insufficient, while if the total gas pressure is higher than 10 Torr, the apparent intensity of the plasma is increased since the number of the gas molecules is large, whereby the fibrils are undesirably cut.

Further, in this case, when the porous fiber sheet treated is directly placed on an electrode plate, there is a possibility to undesirably cause the damage of the surface of the porous fiber sheet and cutting of the fibrils of the sheet by the collision of accelerated electrons and charged particles. Hence, in the present invention, distance from the electrode to the porous fiber sheet treated is usually from 1 to 20 cm, and preferably from 2 to 10 cm. By this treatment, hydroxyl groups, carbonyl groups, carboxyl groups, etc., are introduced into the porous fiber sheet, whereby the porous fiber sheet is rendered hydrophilic.

The present invention is described in more detail by reference to the following examples, which should not be construed as limiting the scope of the invention.

### Examples 1 to 4

A porous fiber sheet having a core-sheath structure of polypropylene (core) and polyethylene (sheath), the surface chemical characteristics of which were those of polyethylene (nonwoven fabric having a thickness of 140 µm, fiber diameters of from 20 to 50 µm, a porosity of 55%, and a basis weight of 55 g/m²) was set at a position of 10 cm apart from an electrode of a plasma treatment apparatus in parallel with the electrode. Pressure in the plasma treatment apparatus was reduced, an oxygen gas was supplied therein at flow rate of 10 cc.(STP: Standard Temperature and Pressure)/min to adjust the pressure in the apparatus to 0.06 Torr, and the sheet was treated such that the product of the output density of a high frequency output of 13.56 MHz and the treatment time became a predetermined value. The porous fiber sheet was took out from the apparatus to obtain each of the porous fiber sheets (Examples 1 to 4) of the present invention.

Each porous fiber sheet thus treated was cut into 5 cm in width, one end thereof was immersed in pure water, and the water absorbed height (mm) after 2 minutes was measured. Breaking strength and breaking elongation of each sample were also measured according to JIS L-1096. Furthermore, the weight ratio of the water absorbed porous fiber sheet to each porous fiber sheet itself (water absorbing weight ratio) was determined.

The results obtained are shown in Table 1 below.

Also, when a water droplet was droped onto the porous fiber sheet obtained in Example 1, the sheet quickly absorbed water and showed that the porous fiber sheet had a capacity of retaining water of the weight of 1.8 times per unit area. On the other hand, when a water droplet was dropped on the untreated porous fiber sheet, the water droplet was repelled as the spherical form at a contact angle of 106°, which showed that the untreated porous fiber sheet did not have a water-holding capacity.

The water-permeation capacity of the treated porous fiber sheet was a pure water flux of 30 ml/(cm²·min.) at a pressure of 0.01 kg/cm². On the other hand, the untreated porous fiber sheet did not permeate water until the pressure became 0.05 kg/cm² and the pure water flux of the untreated porous fiber sheet was 21 ml/(cm²·min.).

When an end portion of the porous fiber sheet of Example 1 was immersed in a 40% potassium hydroxide aqueous solution which is used as an electrolyte for a battery according to JIS P-8141, the absorption rate was 95 mm/30 min. Also, the porous fiber sheet could absorb the solution of 1.8 times per unit area of the porous fiber sheet. On the other hand, in the untreated porous fiber sheet, the aborption speed and the absorption capacity were 0.

### Example 5

By applying the same plasma treatmnet as in Example 1 to a nonwoven fabric (20% by weight of polypropylene fibers) obtained by mixing the composite fibers of the same core-sheath structure as used in Example 1 and polypropylene fibers (fiber diameters of from 20 to 50 µm) at a weight ratio of 4 : 1, a porous fiber sheet of the present invention was obtained.

### Comparative Examples 1 and 2

The porous fiber sheet used in Example 1 for the plasma treatment was irradiated with electron beam at 20 mega rads in air using an electron beam accelerator under the conditions of an accelerating voltage of 2,000,000 V and a beam electric current of 20 mA. The porous fiber sheet thus treated was immersed in a 30% methanol solution of methacrylic acid to conduct graft polymerization for each predetermined time at 70°C. The sheet was washed with hot water of 60°C for 30 minutes followed by drying to obtain two kinds of porous fiber sheets each having a different graft ratio and being rendered hydrophilic. Each porous fiber sheet thus rendered hydrophilic was evaluated by the same methods as in Example 1 and the results obtained are also shown in Table 1 below.

As a result of the graft polymerization, both the breaking strength and the breaking elongation of each sample were lower than those of the samples in Examples 1 to 4 and also the porous fiber sheets obtained in Comparative Examples 1 and 2 showed a low liquid permeability.

### Comparative Example 3

The untreated porous fiber sheet used in Example 1 was evaluated in the same methods as in the above Examples and the results obtained are shown in Table 1 below.

**Table 1**

| | (A) | (B) | (C) | (D) | (E) | (F) | (G) | (H) |
|---|---|---|---|---|---|---|---|---|
| Example 1 | 3.9 | - | 31 | 23 | 30 | 2.2 | 0.15 | 180 |
| Example 2 | 7.8 | - | 34 | 22 | 31 | 2.5 | 0.26 | 180 |
| Example 3 | 15.6 | - | 41 | 23 | 31 | 2.3 | 0.35 | 200 |
| Example 4 | 31.2 | - | 43 | 22 | 28 | 2.4 | 0.43 | 230 |
| Example 5 | 7.8 | - | 22 | 28 | 10 | 2.0 | 0.23 | 170 |
| Comparative Example 1 | - | 14 | 5 | 17 | 19 | 3.1 | - | 220 |
| Comparative Example 2 | - | 59 | 2 | 18 | 20 | 5.2 | - | 290 |
| Comparative Example 3 | No treatment | | (a) | 23 | 31 | 2.3 | 0.00 | 0 |
| (A): Plasma treated amount [W·sec./cm²] (B): Graft ratio [%] (C): Water-absorbed height after 2 minutes since immersion of an end of each sheet in pure water [mm] (D): Breaking strength [kg/5cm width] (E): Breaking elongation [%] (F): Air permeability [sec/100ml] (G): Ratio of O/C by ESCA (H): Water absorption weight ratio [%] (a): No water was absorbed. | | | | | | | | |

### Examples 6 to 8

Each of porous fiber sheets each composed of polypropylene fibers, polyethylene fibers, polyester fibers, polyphenylene sulfide fibers, or polyamide fibers was subjected to the plasma treatment by the same method as in Example 1. The evaluation results of those porous fiber sheets thus treated are shown in Table 2.

**Table 2**

| Material | (A') | (B') | (C') | (D') | (E') | (F') |
|---|---|---|---|---|---|---|
| Polypropylene | 1 - 5 | 50 | 140 | 7.8 | 31 | 6.3 |
| Polyethylene | 10 - 25 | 55 | 130 | 7.8 | 33 | 11.0 |
| Polyester | 10 - 30 | 55 | 150 | 7.8 | 37 | 6.9 |
| Polyamide | 20 - 50 | 60 | 130 | 7.8 | 35 | 8.9 |
| Polyphenylene Sulfide | 20 - 40 | 40 | 120 | 7.8 | 38 | 13.0 |
| (A'): Fiber diameter [µm] (B'): Basis weight [g/m²] (C'): Thickness [µm] (D'): Plasma treated amount [W·sec/cm²] (E'): Absorbed water height after 2 minutes since immersion of an end of the sheet in pure water [mm] (F'): Air permeability [sec/100 ml] | | | | | | |

### Comparative Example 4

The porous fiber sheet used in Example 1 for the plasma treatment was subjected to the plasma treatment as in Example 1. In this case, however, when the product of the high-frequency output density and the treatment time was reduced, the value of O/C by ESCA was 0.03. Also, the water absorption rate of pure water was lower than 1 mm/2 minutes. The hydrophilic property of the porous fiber sheet thus treated was low and was unsuitable as a separator for a battery.

### Comparative Example 5

The plasma treatment as in Comparative Example 4 was followed except for increasing the product of the high-frequency output density and the treatment time to 100. In this case, the value of O/C by ESCA was 0.78. Also, the breaking strength of the porous fiber sheet thus treated was 8 kg/50 mm width and the breaking elongation was 10%, which were lower than those of the untreated fiber sheet in Comparative Example 3.

As described above, according to the examples of the present invention, each of the porous fiber sheets each composed of polymer fibers is rendered hydrophilic to the extent that the absorption rate for pure water under the atmosphere of 25°C and 60% in humidity becomes at least 10 mm/2 minutes without decreasing the mechanical strength such as the breaking strength and the breaking elongation. Also, in the examples of the present invention, since hydrophilic monomers are not used, a porous fiber sheet rendered hydrophilic in a pure state is obtained and is useful as a prefilter for a liquid filteration membrane having a stabilized faculty, a support, a separator for a battery, a liquid-holding sheet of a separator for a battery, etc.

As described above in detail, according to the present invention, even in a porous fiber sheet using hydrophobic fibers, since the absorption rate for pure water when an end of the porous fiber sheet is immersed in pure water under an atmosphere of 25°C and 60% in humidity is at least 10 mm/2 minutes, the porous fiber sheet having a sufficient hydrophilic property can be achieved.

Also, according to the production process of the present invention, by subjecting a porous fiber sheet to a low-temperature plasma treatment under the specific condition, a porous fiber sheet imparted with the hydrophilic property that the absorption rate for pure water is least 10 mm/2 minutes can be obtained without changing the structure and the characteristics such as the strength, which the porous fiber sheet inherently possesses.

While the invention has been described in detail and with reference to specific embodiments thereof, it will be apparent to one skilled in the art that various changes and modifications can be made therein without departing from the spirits and scope thereof.

## Claims

1. A hydrophilic fiber sheet comprising an air permeable sheet comprising synthetic fibers, wherein the absorption rate thereof for pure water when an end of the sheet is immersed in pure water under an atmosphere of 25°C and 60% in humidity is at least 10 mm/2 minutes.

2. The hydrophilic fiber sheet of claim 1, wherein the air permeable sheet is a nonwoven fabric comprising polyester fibers.

3. The hydrophilic fiber sheet of claim 1, wherein the air permeable sheet is a nonwoven fabric comprising polyolefin fibers.

4. The hydrophilic fiber sheet of claim 1, wherein the air permeable sheet is a nonwoven fabric comprising composite fibers in which the surface of polypropylene fibers is sheathed with polyethylene, or a nonwoven fabric containing the composite fibers and polypropylene fibers, wherein the ratio of O/C of the surface of the sheet by an electron spectroscopy for chemical analysis (ESCA) is in the range of from 0.05 to 0.7.

5. The hydrophilic fiber sheet of claim 4, wherein the O/C ratio is from 0.10 to 0.35.

6. The hydrophilic fiber sheet of claim 1, wherein the absorption rate is 30 mm/2 min or more.

7. The hydrophilic fiber sheet of claim 1, which has a pore size of from 1 to 200 µm, a porosity of from 30 to 80%, a thickness of from 20 to 500 µm, a fiber diameter of from 1 to 100 µm and a basis weight of from 5 to 100 g/m².

8. The hydrophilic fiber sheet of claim 1, which has the air permeability of from 0.1 to 100 sec/100 ml.

9. A process for producing a hydrophilic fiber sheet comprising an air permeable sheet comprising synthetic fibers, which comprises subjecting at least a part of the synthetic fibers constituting the air permeable sheet to a low-temperature plasma treatment under the condition that the product of the output density of a high frequency output of from 5 to 15 MHz and the treatment time is from 0.1 to 50 W·sec./cm² and a gas pressure is from 0.01 to 10 Torr.

10. The process of claim 9, wherein the plasma treatment is conducted at a temperature of 100°C or less.
